Europäisches Patentamt

European Patent Office

Office européen des brevets

(11) Veröffentlichungsnummer: **0 017 775**
**A1**

# EUROPÄISCHE PATENTANMELDUNG

(21) Anmeldenummer: **80101402.8**

(22) Anmeldetag: **18.03.80**

(51) Int. Cl.³: **C 10 B 21/12**

(30) Priorität: **20.04.79 DE 2915952**

(43) Veröffentlichungstag der Anmeldung: **29.10.80**
**Patentblatt 80/22**

(84) Benannte Vertragsstaaten: **BE FR GB IT LU NL SE**

(71) Anmelder: **Krupp-Koppers GmbH, Moltkestrasse 29, D-4300 Essen 1 (DE)**

(72) Erfinder: **Dürselen, Heinz, Dipl.-Ing., Laubrockweg 5, D-4300 Essen 14 (DE)**
Erfinder: **Küppenbender, Rainer, Rosendahl-Strasse 81, D-4030 Ratingen 8 (DE)**
Erfinder: **Lewandowsky, Hugo, Karolinenstrasse 20, D-4300 Essen 1 (DE)**

(54) Horizontalkammer-Verkokungsofenbatterie.

(57) Die Erfindung betrifft eine Horizontalkammer-Verkokungsofenbatterie mit abwechselnd nebeneinander angeordneten Ofenkammern und Heizwänden und darunter vorgesehenen Regeneratoren für die Vorwärmung der Verbrennungsluft und gegebenenfalls des Schwachgases. Die Zufuhr von Starkgas erfolgt jeweils durch eine horizontale Leitung (4, 5) zwischen Regeneratoroberkante und Heizzugsohle und von dieser Leitung abzweigende zu den einzelnen Heizzügen führende vertikale, mit einem Kalibrierelement (11) versehene Leitungen (10). Das Kalibrierelement ist im Bereich der Heizzugsohle (6) lose in die jeweilige vertikale Leitung eingesetzt und mündet in eine in den Heizzug hineinragende vertikale Verlängerung (14) der Starkgasleitung, deren Innenquerschnitt so gross bemessen ist, dass das Kalibrierelement durch diese hindurch auch während des Betriebes herausnehmbar bzw. auswechselbar ist.

EP 0 017 775 A1

KRUPP-KOPPERS GMBH, Moltkestrasse 29, 4300 Essen

Horizontalkammer-Verkokungsofenbatterie.

Die Erfindung betrifft eine Horizontalkammer-Verkokungsofenbatterie mit abwechselnd nebeneinander angeordneten Ofenkammern und Heizwänden und darunter vorgesehenen Regeneratoren für die Vorwärmung der Verbrennungsluft und gegebenenfalls des Schwachgases, wobei die Zufuhr von Starkgas jeweils durch eine horizontale Leitung zwischen Regeneratoroberkante und Heizzugsohle und von dieser Leitung abzweigende, zu den einzelnen Heizzügen führende vertikale Leitungen erfolgt und die Dosierung des Starkgasstromes zum jeweiligen Heizzug mittels eines Kalibrierelementes vorgenommen wird, das im Bereich der Heizzugsohle angeordnet ist.

Es ist bekannt, das Kalibrierelement im Bereich der Heizzugsohle fest im Ofenmauerwerk anzuordnen, so dass ein Auswechseln des Kalibrierelementes während des Betriebes nicht möglich ist. Ein derartiges Auswechseln aber ist zur Anpassung der Beheizung an veränderte Betriebsbedingungen manchmal wünschens-wert.

Es ist ferner bekannt, aus beheizungstechnischen Gründen den Starkgasaustritt in den Heizzug oberhalb der Heizzugsohle vorzusehen. Hierzu ist eine in den Heizzug von unten her hineinragende Starkgasleitung angeordnet, die eine Verlängerung der erwähnten Zweigleitung darstellt. Bei einer derartigen Anordnung hat man bisher das Kalibrierelement auf die Mündung der

./.

Starkgasleitung aufgesetzt. Es war hierbei dann möglich, bei Bedarf das Kalibrierelement durch eine von der Ofendecke in den Heizzug eingeführte Setzstange zu entfernen und ein für die gegebenen Verhältnisse geeigneteres Kalibrierelement wieder auf die Starkgasleitung aufzusetzen. Es hat sich dabei jedoch als nachteilig erwiesen, dass das Kalibrierelement an der heissesten Stelle des Gasweges angeordnet ist, wodurch es dort zu Verkrakkungen des hindurchströmenden Starkgases und damit zu Graphitablagerungen kommen kann, die dann den lichten Querschnitt des Kalibrierelementes verringern oder dieses gar ganz zusetzen.

Der Erfindung liegt daher die Aufgabe zugrunde, das Starkgaszufuhrsystem so zu gestalten, dass einerseits das Kalibrierelement auswechselbar ist und dass andererseits die Gefahr der Querschnittsverringerung durch Graphitansatz beseitigt wird.

Erfindungsgemäss wird hierzu vorgeschlagen, dass das Kalibrierelement im Bereich der Heizzugsohle lose in die vertikale Leitung eingesetzt ist und in eine in den Heizzug hineinragende vertikale Verlängerung der Starkgasleitung mündet, deren Innenquerschnitt so gross bemessen ist, dass das Kalibrierelement durch diese hindurch auch während des Betriebes herausnehmbar bzw. auswechselbar ist.

Durch die erfindungsgemässe Massnahme wird das Kalibrierelement an eine Stelle vergleichsweise niedriger Vorwärmtemperatur des Starkgases verlagert, so dass dort Verkrackungen des Starkgases und dadurch hervorgerufene Ablagerungen im Strömungsquerschnitt des Kalibrierelementes praktisch nicht mehr auftreten

./.

können.   In der Verlängerung der Starkgasleitung und im Bereich ihrer Mündung in den Heizzug, die beide einen relativ grossen Innenquerschnitt aufweisen, sind solche Ablagerungen, wie langdauernde Betriebsbeobachtungen ergeben haben, nicht zu befürchten.   Eine bevorzugte Ausführungsform der Erfindung besteht darin, dass das Kalibrierelement unterhalb der Heizzugsohle sitzt, wodurch das Starkgas diese Stelle mit der geringsten Vorwärmung passiert.

Die Erfindung schlägt ferner vor, dass das Kalibrierelement auf einem ringförmigen, konsolenartigen Pass-Sitz aufgesetzt ist, der mit einer oder mehreren schlitzförmigen radialen Aussparungen versehen ist.   Durch diese Aussparungen kann die Setzstange mit einem daran angebrachten Ansatz unter das Kalibrierelement greifen, worauf letzteres sicher von seinem Pass-Sitz abgehoben und aus der Verlängerung der Starkgasleitung sowie aus dem übrigen Heizzugbereich entfernt werden kann.   Abgerundete Ein- und Austritte des Kalibrierelementes, wie sie schon aus strömungstechnischen Gründen zu bevorzugen sind, erleichtern hierbei zusätzlich das Einführen der Setzstange.

Nach einem anderen Vorschlag der Erfindung ist das Kalibrierelement in einen konischen Pass-Sitz eingesetzt.

Die Erfindung ist in den Zeichnungen beispielsweise veranschaulicht.

./.

Es zeigen :

Fig. 1   einen vertikalen Schnitt durch einen Heizzug,

Fig. 2   einen vertikalen Schnitt in grösserem Massstab durch den Bereich der Starkgaszufuhr
und

Fig. 3   eine andere Ausführung des Pass-Sitzes des
Kalibrierelementes als der in Fig. 2 dargestellten.

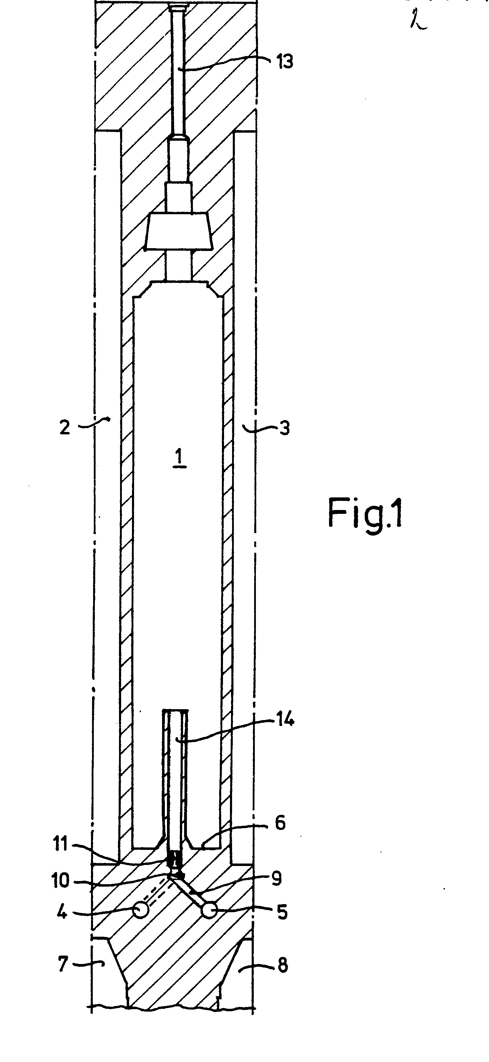

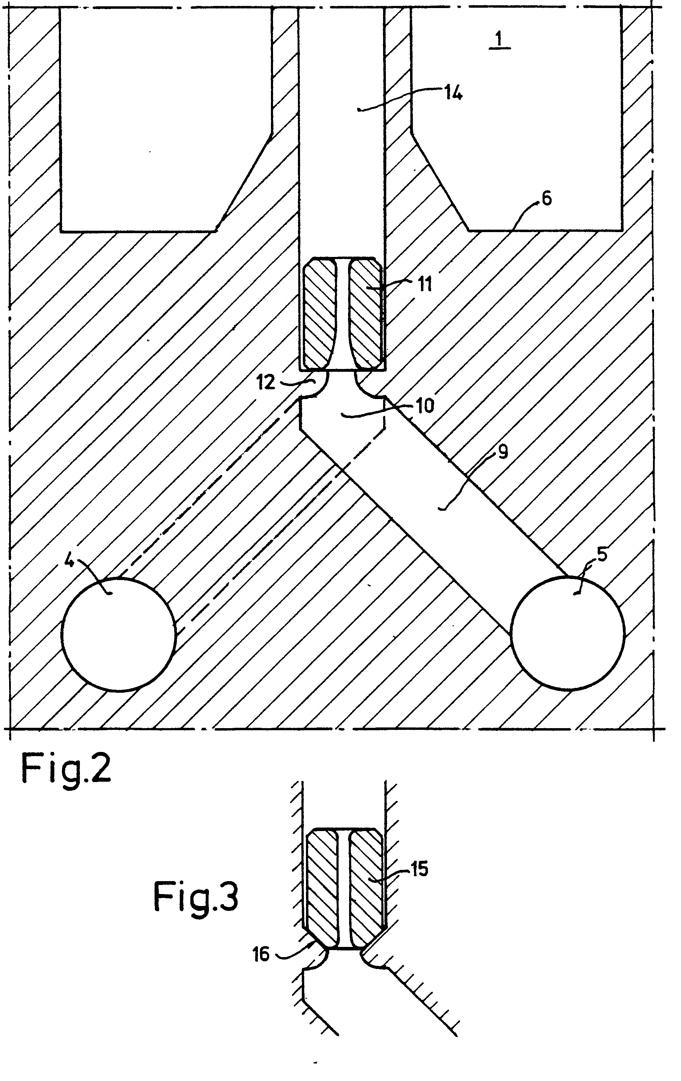

In Fig. 1 ist mit 1 der Heizzug einer Heizwand bezeichnet, die an die beiden mit 2 und 3 bezifferten Ofenkammern angrenzt. Die Zufuhr des Starkgases zu den Heizzügen dieser Heizwand erfolgt durch die horizontalen Leitungen 4 bzw. 5, die im Mauerwerk zwischen der Heizzugsohle 6 und den Regeneratorräumen 7 und 8 verlaufen. Zu dem dargestellten Heizzug 1 geht von der Starkgasleitung 5 eine schräg nach oben verlaufende Zweigleitung 9 ab, die schliesslich in einen vertikalen Teil 10 übergeht. In diesem vertikalen Teil ist das Kaliberelement 11 lose angeordnet, indem es auf einem ringförmigen, konsolenartigen Pass-Sitz 12 aufgesetzt ist (Fig. 2). Dieser Pass-Sitz 12 ist mit einer oder auch mehreren radialen schlitzförmigen, hier nicht dargestellten Aussparungen versehen, die das Ergreifen des Kalibrierelementes mittels einer Setzstange erleichtern, die durch die Deckenöffnung 13 eingeführt werden kann. Das düsenförmige Kalibrierelement 11 mündet in eine Verlängerung 14 der Starkgasleitung, die in den Heizzug 1 hineinragt. Der Querschnitt dieser Verlängerung der

./.

0017775

Starkgasleitung ist hierbei so gross bemessen, dass das Kalibrierelement erforderlichenfalls durch sie hindurch mittels der Setzstange nach oben herausgeholt und durch ein anderes ersetzt werden
kann.  Die Zufuhr der Verbrennungsluft ist in den Zeichnungen ebenfalls nicht dargestellt.  Sie erfolgt an der Heizzugsohle 6 durch darin vorgesehene Öffnungen.

Fig. 3 zeigt eine andere Ausführungsform von Kalibrierelement
und Pass-Sitz.  Wie ersichtlich, besitzt das hier dargestellte Kalibrierelement 15 sowie der zugeordnete Pass-Sitz 16 konische Sitzflächen, die einen sicheren koaxialen Sitz des Kalibrierelementes
in der Starkgasleitung gewährleisten.

Patentansprüche :

1. Horizontalkammer-Verkokungsofenbatterie mit abwechselnd nebeneinander angeordneten Ofenkammern und Heizwänden und darunter vorgesehenen Regeneratoren für die Vorwärmung der Verbrennungsluft und gegebenenfalls des Schwachgases, wobei die Zufuhr von Starkgas jeweils durch eine horizontale Leitung zwischen Regeneratoroberkante und Heizzugsohle und von dieser Leitung abzweigende, zu den einzelnen Heizzügen führende vertikale Leitungen erfolgt und die Dosierung des Starkgasstromes zum jeweiligen Heizzug mittels eines Kalibrierelementes vorgenommen wird, das im Bereich der Heizzugsohle angeordnet ist, dadurch gekennzeichnet, dass das Kalibrierelement (11, 15) im Bereich der Heizzugsohle (6) lose in die vertikale Leitung (10) eingesetzt ist und in eine in den Heizzug hineinragende vertikale Verlängerung (14) der Starkgasleitung mündet, deren Innenquerschnitt so gross bemessen ist, dass das Kalibrierelement durch diese hindurch auch während des Betriebes herausnehmbar bzw. auswechselbar ist.

2. Horizontalkammer-Verkokungsofenbatterie nach Anspruch 1, dadurch gekennzeichnet, dass das Kalibrierelement (11, 15) unterhalb der Heizzugsohle (6) sitzt.

3. Horizontalkammer-Verkokungsofenbatterie nach Anspruch 1 - 2, dadurch gekennzeichnet, dass das Kalibrierelement (11, 15) auf einem ringförmigen konsolenartigen Pass-Sitz (12, 16) aufgesetzt ist, der mit einer oder mehreren schlitzförmigen radialen Aussparungen versehen ist.

./.

0017775

4. Horizontalkammer-Verkokungsofenbatterie nach Anspruch 1 - 3, dadurch gekennzeichnet, dass das Kalibrierelement (15) in einen konischen Pass-Sitz (16) eingesetzt ist.

0017775

2

Fig.1

Fig.2

Fig.3

**EUROPÄISCHER RECHERCHENBERICHT**

0017775

EP 80 10 1402

Europäisches Patentamt

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 2 294 005 (TAYLOR et al)<br>* Ansprüche 1,2; Figuren 1-3 * | 1-4 |
| | GB - A - 171 117 (BECKER)<br>* Seite 4, Zeilen 106-125;<br>Figuren 2,3 * | 1,2,4 |
| | DE - C - 423 421 (KOPPERS)<br>* Seite 3, Zeilen 5-12;<br>Figuren * | 1,2,4 |
| A | DE - C - 174 671 (KOPPERS)<br>* Anspruch; Figuren 1-3 * | 1 |
| A | US - A - 3 072 540 (OTTO)<br>* Anspruch 1; Figuren 1,2 * | 1 |

KLASSIFIKATION DER ANMELDUNG (Int. Cl.)

C 10 B 21/12

RECHERCHIERTE SACHGEBIETE (Int. Cl.)

C 10 B 21/12
21/10
5/02

KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort<br>Den Haag | Abschlußdatum der Recherche<br>24-07-1980 | Prüfer<br>MEERTENS |
|---|---|---|

EPA form 1503.1   06.78